# EUROPEAN PATENT APPLICATION

(11) **EP 1 501 278 A2**
(43) Date of publication of application: **26.01.2005**
(21) Application number: 04254452.8
(22) Date of filing: 26.07.2004
(51) Int. Cl.: H04N 1/409

(54) **Dust problem resolving image processing apparatus**

(30) Priority: 25.07.2003 JP 2003201512
(71) Applicant: Ricoh Company, Ltd., Tokyo 143-8555 (JP)
(72) Inventor: Arai, Hiroshi, 143-8555 Tokyo (JP); Kawamoto, Hiroyuki, 143-8555 Tokyo (JP); Ohyama, Maki, 143-8555 Tokyo (JP); Nishita, Taira, 143-8555 Tokyo (JP); Miyamoto, Isao, 143-8555 Tokyo (JP); Ohkawa, Satoshi, 143-8555 Tokyo (JP); Suguyama, Naoki, 143-8555 Tokyo (JP); Tone, Takeharo, 143-8555 Tokyo (JP)
(74) Representative: Leeming, John Gerard

(57) **Abstract**

An image processing apparatus (1) includes a reading device (4) stationed at a reading position. The reading device (4) includes a light source (4a) that irradiates a reading light to an original document passing through the reading position. A photoelectric conversion element (7) is provided to convert the reading light reflected from the original document (G) into image data. A shading correction function (42) is provided to apply shading correction to the image data in accordance with reference data obtained from a reference white plate (21). A memory (62) is provided to store at least a line of the image data. A dust position specifying device (41) is provided to specify a position of a dust by detecting presence of the dust at predetermined positions (GE1 to GE4) on a light path extending from the light source (4a) to the photoelectric conversion element (7) in accordance with the image data. A counting device (45) is provided to count a number of appearance times of the dust per each of the predetermined positions (GE1 to GE4). An appearance transition device (57,101,102) is provided to store appearance transition data of the dust per each of the predetermined positions (GE1 to GE4).

## Description

The present invention relates to image processing apparatuses for use in image forming apparatuses, in particular to such image processing apparatuses capable of appropriately detecting and correcting a defective pixel causing a black or white line on an image due to a dust or the like.

In an image processing apparatus, such as a scanner, a copier, a facsimile, etc., that optically reads an image from an original document, it is now possible to efficiently read the image by separating and conveying a plurality of original documents one by one to a reading position of a reading section on a platen glass using a SDF (Sheet through Document Feeder) while irradiating a light from a light source arranged beneath a contact glass to the original document and guiding the light reflected from the original document to a photoelectric conversion element such as a CCD (Charge Coupled Device) though a prescribed light passage.

In such an image processing apparatus, when foreign material such as dust, dirt, etc., (herein after collectively referred to as dust) sticks to parts arranged on the light passage, it causes a black or white line on an image, thereby considerably deteriorating image quality.

Then, an original document reading apparatus of a sheet through type has been proposed such that a reading position reading an original document of a sheet through type is changed when abnormality is included in read data as discussed in Japanese Patent Application Laid Open No. 2000-196814.

Further, an original document reading apparatus is known such that data of a line is read prior to insertion of an original document in order to detect if dust exists, and a coordinate data of dust is stored if the dust exists, and the dust coordinate data is neglected and replaced with circumferential pixel data when the original document is read. Such a correction operation is turned ON/OFF to check leading data of the original document at the time of insertion and trailing data thereof at a time of ejection as discussed in Japanese Patent Application Laid Open No. 2000-310820.

Further, this applicant has proposed an image processing apparatus that includes an image reading device reading an image from an original document with prescribed resolution, an analog/digital conversion device converting an image signal output from the image reading device into a digital image signal having a prescribed number of bits, a dust detecting device detecting a pixel position of dust included in the image based upon the digital image signal, and a dust component correction device correcting the digital image signal at the pixel position of the dust as discussed in Japanese Patent Application Laid Open No. 10-294870.

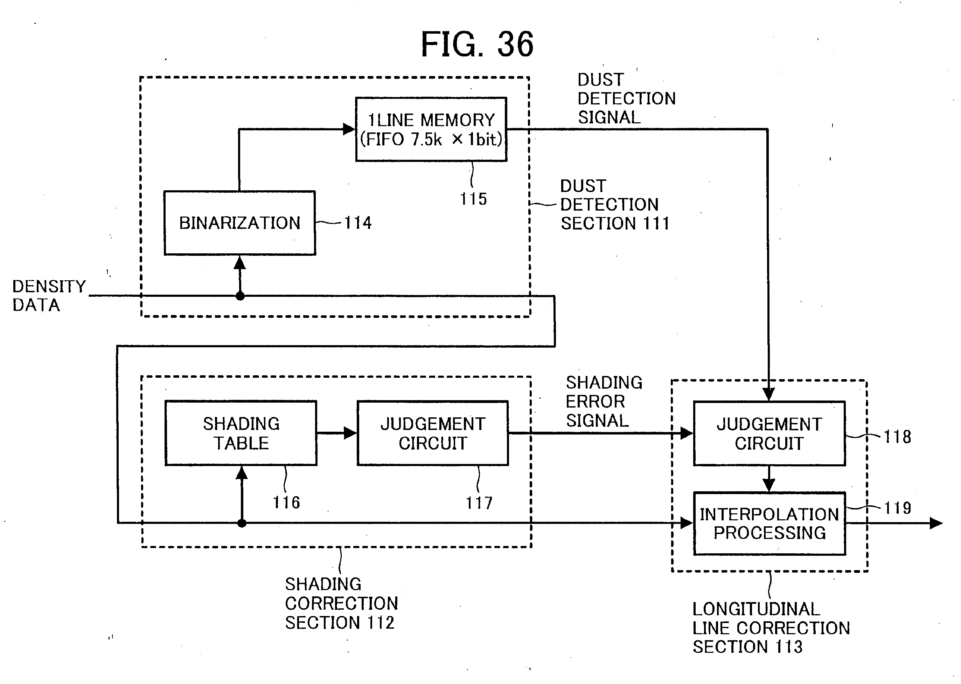

Further, a background image processing apparatus such as a digital copier capable of correcting a longitudinal line generally includes a dust detecting section 111, a shading correction section 112, and a longitudinal line correction section 113 in an image processing circuit for mono color use as illustrated in FIG. 36. The dust detection section 111 includes a binarizing circuit 114 and a one-line memory 115 so as to detect presence of dust and outputs a dust detection signal to the longitudinal line correction section 113 in accordance with density data, i . e . , image data, obtained when a white sheet is read. The shading correction section 112 includes a shading table 116 and a determination circuit 117 to store the density data obtained when the reference white plate is read and determine an occurrence of error in the shading data. The shading correction section 112 outputs a shading error signal to the longitudinal line correction section 113. The longitudinal line correction section 113 includes a determination circuit 118 and an interpolation processing section 119. The determination circuit 118 determines presence of dust based upon a dust detection signal and a shading error signal. The interpolation processing section 119 applies interpolation processing to image data of an original document in accordance with the determination result.

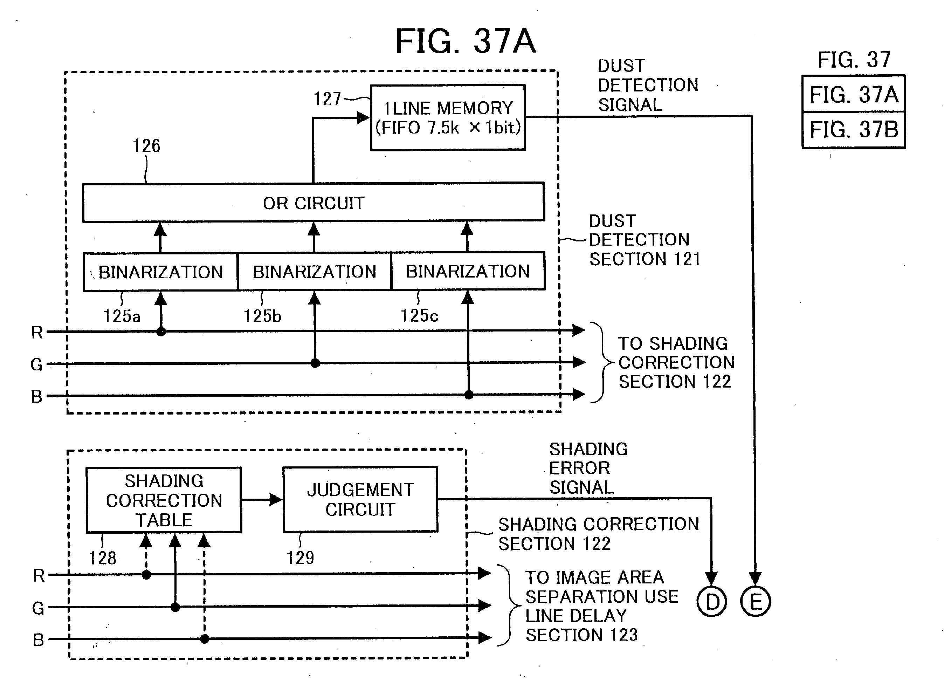

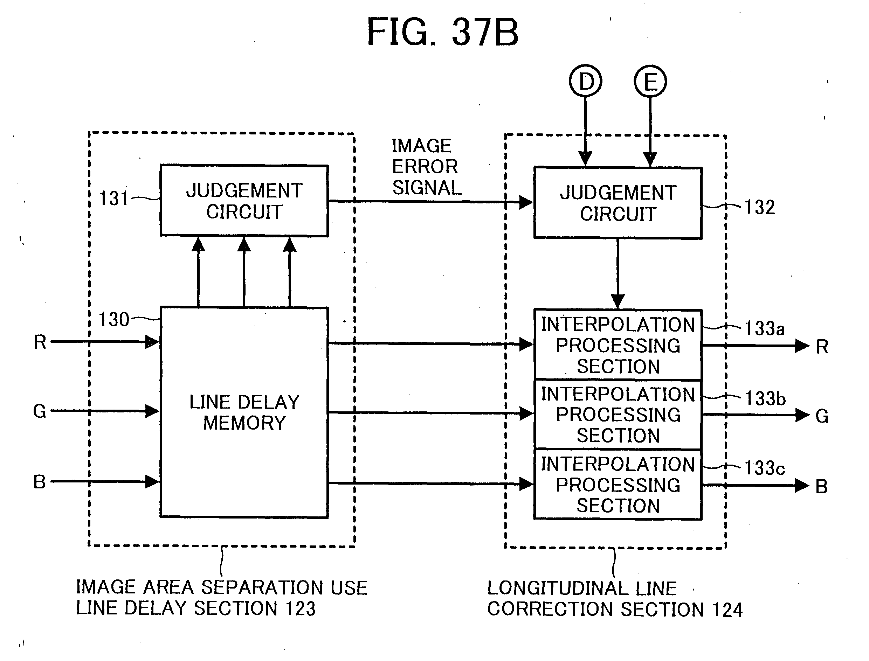

Further, in an image processing circuit for full-color use provided in a background image processing apparatus as illustrated in FIG. 37, a dust detection section 121, a shading correction section 122, an image region separation use line delay section 123, and a longitudinal line correction section 124 are employed. The dust detection section 121 includes three binarizing circuits 125a to 125c, an OR circuit, and a one-line memory 126 so as to detect a dust and output a dust detection signal to the longitudinal line correction section 124 in accordance with RGB data obtained as image data when a white sheet is read. The shading correction section 122 includes a shading table 128 and a determination circuit 129 so as to store RGB data obtained as image data when a reference white plate is read and determines an error in the shading data. The shading correction section 122 outputs a shading error signal to the longitudinal line correction section 124. The image region separation use line delay section 123 includes a line delay memory 130 and a determination circuit 131 so as to continuously determine a binarization result in each of lines of RGB data stored in the line delay memory 130, and to output, through the determination circuit 131, an image error signal to the longitudinal line correction section 124 when all of those are high levels. The longitudinal line correction section 124 includes a determination circuit 132 and three interpolation processing sections 133a to 133c. The determination circuit 132 determines presence of dust in accordance with a dust detection signal, a shading error signal, and an image error signal. The interpolation processing sections 133a to 133c apply interpolation processing to the RGB image data of an original document, respectively, in accordance with determination.

However, in such a background technology, when detecting a dust type and its sticking position or the like at prescribed precision, appropriately, some improvement is still needed.

Specifically, even if a special circuit is needless to be added to the background technology described in Japanese Patent Application Laid Open No. 2000-196814, since a reading position (i.e., a mirror position) is to be adjusted, uneven vibration increases such as in lamp intensity in an optical system, and thereby the scanner performance is reduced.

Further, as shown in Japanese Patent Application Laid Open No. 2000-310820, dust is only detected when existing in the vicinity of an insertion inlet for an original document. For example, dust sticking to a reference white plate for shading correction use or a lamp and a mirror or the like, cannot be detected as a problem.

Further, as shown in Japanese Patent Application Laid Open No. 10-294870, since a digital pixel signal corresponding to a dust position is corrected when the dust is detected, it cannot be corrected in accordance with a dust sticking position and type and so on. Thereby, some improvement is still required.

Specifically, even when image data is corrected based upon dust detection, it is preferable that a correction manner is changed in accordance with a dust sticking position and type or the like so as to improve image quality. Further, when dust sticks to a range where a user readily accesses and maintains or he or she can externally cleans up, it is allowable to frequently display a sign urging the user to perform maintenance in response to dust detection. However, since maintenance is only performed by a service person when a dust enters into a scanner, it is preferable to credibly detect such dust. Further, since a maintenance manner is different from when dust floats to when it securely sticks, dust should be more precisely detected.

Accordingly, an object of the present invention is to address and resolve such and other problems and provide a new and novel image processing apparatus. Such a new and novel image processing apparatus includes a reading device stationed at a reading position, including a light source irradiating a reading light to an original document passing therethrough. A photoelectric conversion element is provided to convert the reading light reflected from the original document into image data. A shading correction function is provided to apply shading correction to the image data in accordance with reference data obtained from a reference white plate. A memory is provided to store at least a line of the image data. A dust position specifying device is provided to specify a position of dust by detecting presence of the dust at predetermined positions on a light path extending from the light source to the photoelectric conversion element in accordance with the image data. A counting device is provided to count a number of appearances of the dust per each of the predetermined positions. An appearance transition device is provided to store appearance transition data of the dust per each of the predetermined positions.

In another embodiment, a delaying device is added to apply line delay processing for image region separation use to the image data. In the preferred embodiment, the dust position specifying device specifies a position of the dust in accordance with the image data and a result of the delay processing.

In yet another embodiment, a display is provided to display at least one of the number of dust appearances and the dust appearance transition data per each of the predetermined positions.

In yet another embodiment, the display device displays maintenance information to promote maintenance by specifying a dusty portion to be serviced.

A more complete appreciation of the present invention and many of the attendant advantages thereof will be readily obtained as the same becomes better understood by reference to the following detailed description when considered in connection with the accompanying drawings, wherein:
FIG. 1 is a front side view of a digital copier to which one embodiment of an image processing apparatus according to the present invention is applied;
FIG. 2 is a schematic front side view of a home position and its vicinity of the digital copier of FIG. 1;.
FIG. 3 is a block chart illustrating a relevant part of the digital copier of FIG. 1;
FIG. 4 is a block chart illustrating a mono-chrome use dust correction circuit including an IPU shown in FIG. 3;
FIG. 5 is a block chart illustrating a dust correction circuit and an appearance controlling section each shown in FIG. 4;
FIG. 6 is a block chart illustrating a full-color use dust correction circuit including an IPU shown in FIG. 3;
FIG. 7 is a block chart illustrating a dust correction circuit and an appearance controlling section each shown in FIG. 6;
FIG. 8 is a block chart specifically illustrating the circuit of the dust detection section shown in FIGS. 4 to 7;
FIG. 9 is a chart illustrating a dust detection processing operation performed in the dust detection section shown in FIG 8;
FIG. 10 is a chart illustrating a shading correction section shown in FIGS. 4 to 7;
FIG. 11 is a chart specifically illustrating an exemplary shading correction table shown in FIG. 10 provided in the line delay section for image region separation use shown in FIGS. 6 and 7;
FIG. 12 is a chart specifically illustrating a line delay section for image region separation use shown in FIGS. 6 and 7;
FIG. 13 is a chart illustrating dust determination processing performed in the image region separation use line delay section of FIG 12;
FIG. 14 is a chart illustrating dusts sticking in various sections of the scanner section included in the digital copier of FIG. 1;
FIG. 15 is a chart illustrating a dust detection signal, a shading error signal, an image error signal, and longitudinal line correction in a case of alphanumeric number P21 defined in Table 2;
FIG. 16 is a chart illustrating a dust detection signal, a shading error signal, an image error signal, and longitudinal line correction in a case of alphanumeric number P22 defined in Table 2;
FIG. 17 is a chart illustrating a dust detection signal, a shading error signal, an image error signal, and longitudinal line correction in a case of alphanumeric number P23 defined in Table 2;
FIG. 18 is a chart illustrating a dust detection signal, a shading error signal, an image error signal, and longitudinal line correction in a case of alphanumeric number P24 defined in Table 2;
FIG. 19 is a chart illustrating a dust detection signal, a shading error signal, an image error signal, and longitudinal line correction in a case of alphanumeric number P25 defined in Table 2;
FIG. 20 is a chart illustrating a dust detection signal, a shading error signal, an image error signal, and longitudinal line correction in a case of alphanumeric number P26 defined in Table 2;
FIG. 21 is a chart illustrating a dust detection signal, a shading error signal, an image error signal, and longitudinal line correction in a case of alphanumeric number P28 defined in Table 2;
FIG. 22 is a chart specifically illustrating a circuit of an appearance controlling section shown in FIGS. 5 and 7;
FIG. 23 is a chart illustrating a number of appearance times counted per a dust position by an appearance counter shown in FIG. 22;
FIG. 24 is a chart illustrating exemplary transition of appearance of a dust GE1 listed on an appearance transition table;
FIG. 25 is also a chart illustrating exemplary transition of appearance of a dust GE2 listed on the appearance transition table;
FIG. 26 is also a chart illustrating exemplary transition of appearance of a dust GE3 listed on the appearance transition table;
FIG. 27 is also a chart illustrating exemplary transition of appearance of a dust GE4 listed on the appearance transition table 22;
FIG. 28 is a schematic plan view of a display section shown in FIG. 3;
FIG. 29 is a chart illustrating a time of reading an original document in the digital copier of FIG. 1;
FIG. 30 is a chart illustrating dust detection for mono color use performed by the digital copier of FIG. 1;
FIG. 31 is a chart illustrating dust detection and a time of longitudinal line correction for full-color use performed in the digital copier of FIG. 1;
FIG. 32 is a chart illustrating exemplary maintenance notes displayed on the display section when the dust GE1 shown in FIG. 14 is detected;
FIG. 33 is a chart illustrating exemplary maintenance notes displayed on the display section when the dust GE2 illustrated in FIG. 14 is detected;
FIG. 34 is a chart illustrating exemplary maintenance notes displayed on the display section when the dust GE3 illustrated in FIG. 14 is detected;
FIG. 35 is a chart illustrating exemplary maintenance notes displayed on the display section when the dust GE4 illustrated in FIG. 14 is detected;
FIG. 36 is a block chart illustrating an exemplary dust correction circuit for mono-color use provided in a background digital copier;
FIG. 37 is a block chart illustrating an exemplary dust correction circuit for full-color use provided in a background digital copier;
FIG. 38 illustrates Table 1 showing dust determination results; and
FIG. 39 illustrates Table 2 showing another dust determination results.

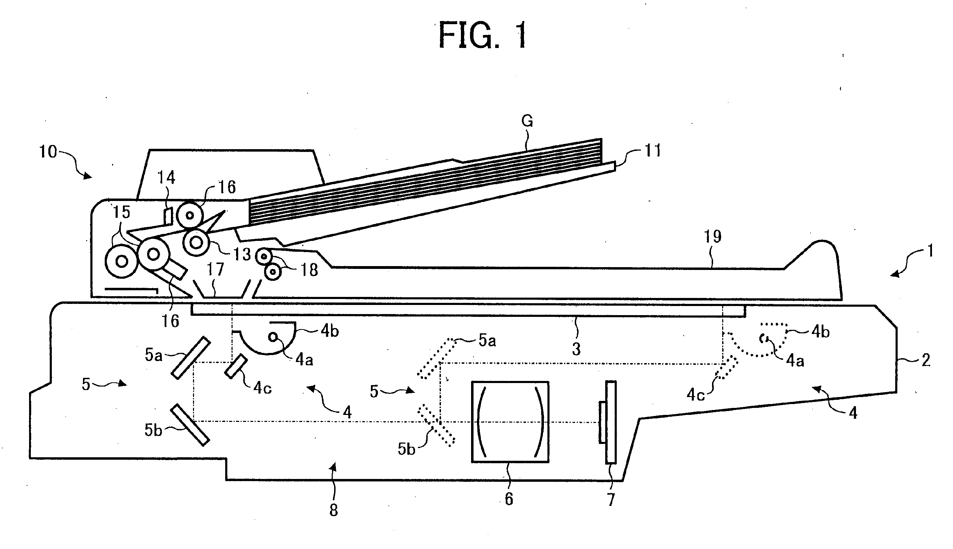

Referring now to the drawings, wherein like reference numerals designate identical or corresponding parts throughout several views, in particular in FIG. 1, a digital copier 1 includes a contact glass 3 arranged in an upper side of a body casing 2, and a scanner section (i.e., a reading device) 8 arranged in the body casing 2 below the contact glass 3. The scanner section 8 is formed from first and second moving members 4 and 5, a lens 6, and a CCD (Charge Coupled Device) 7 serving as a photoelectric conversion element. A light source 4a, a reflector 4b, and a mirror 4c are mounted on the first moving member 4. A pair of mirrors 5a and 5b is mounted on the second moving member 5.

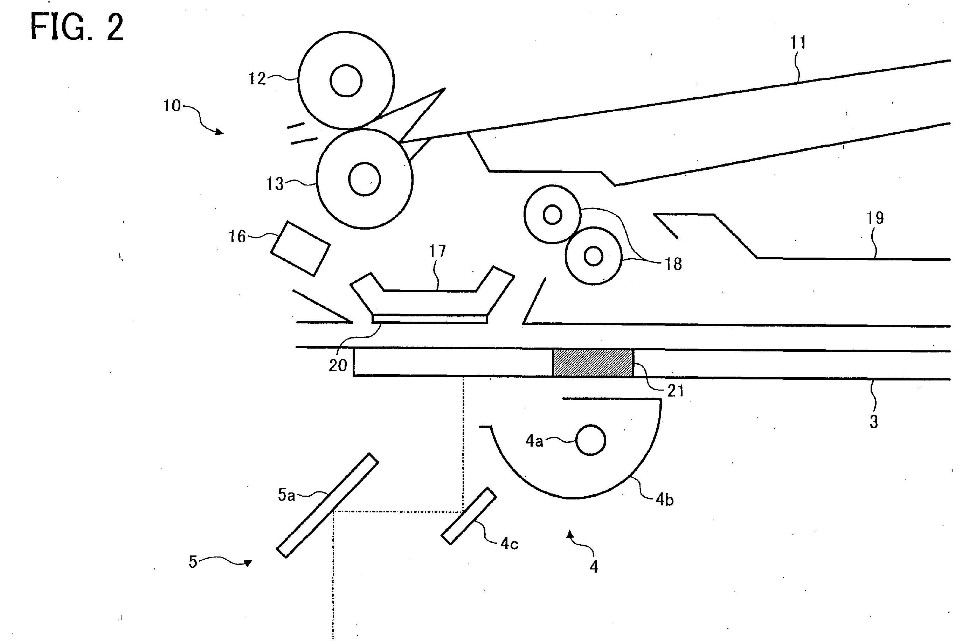

The digital copier 1 also includes an SDF (Sheet through Document Feeder) 10 above the contact glass 3. The SDF at least includes an original document table 11, a sheet feed roller 12, a separation roller 13, a registration switch 14, a registration roller 15, a timing switch 16, a sheet original document cover 17, a pair of ejection rollers 18, and an ejection tray 19. On a contact glass side surface of the sheet original document cover 17, there is provided a white sheet 20 for dust detection use as illustrated in FIG. 2.

Further, in the vicinity of a reading position on the contact glass 3, a reference white plate 21 is arranged so as to provide reference data for shading correction use.

The ejection tray 19 overlaying the contact glass 3 opens and closes an upper surface thereof. The ejection tray 19 has white color on its rear side surface and causes a set original document G to tightly pressure contact the contact glass 3.

In the SDF 10, a plurality of original documents is stacked on an original document table 11. The feed roller 12 driven by a stepping motor or the like (not shown) and a separation roller 13 cooperatively separate and feed the plurality of sheets one by one to the registration roller 15. A registration switch 14 detects the original document G launched to the registration roller 15. The registration roller 15 adjusts a time and conveys the original document G to the reading position between the sheet original document cover 17 and the contact glass 3. The registration roller 15 conveys the original document G to the pair of ejection rollers 18.

In the digital copier 1, the scanner section 8 reads an image from the original document G (i.e., a contact glass side surface) fed through the original reading position.

In the SDF 10, after completion of its reading, the original document G is further conveyed and ejected by the pair of ejection rollers 18 onto the ejection tray 19.

In the scanner section 8, the first and second moving members 4 and 5 are horizontally moved in a sub scanning direction by a stepping motor (not shown). A light is irradiated from the light source 4a (e.g. a fluorescent lamp) mounted on the first moving member 4, and is converged by the reflector 4b. The light is then irradiated to the original document G set on the contact glass 3. The light reflected from the original document G is reflected by the mirror 4c mounted on the first moving member 4 toward the second moving member 5. The light irradiated from the first moving member 4 is reflected by the pair of mirrors 5a and 5b mounted on the second moving member 5 in turn and is irradiated toward the lens direction 6. The lens 6 converges and forwards the light irradiated from the second moving member 5 to the CCD. The CCD 7 includes a plurality of CCD elements as photoelectric conversion elements arranged in a dimension so as to apply photoelectric conversion to the light irradiated from the lens, and to output now analog image data (i.e., an image signal). Further, the scanner section 8 irradiates a light to the reference white plate 21. A light reflected by the reference white plate 21 is led to the CCD 7 in the similar manner as mentioned above. The reference data for shading correction use is output from the CCD 7.

Further, as an original document reading mode, there exists a book mode in which an original document G set on the contact glass 3 by opening the original document cover plate 4 is read. There is also an SDF mode in which an image is read from an original document G when a plurality of original documents G set on the original document table 11 is conveyed one by one using the SDF 10 to the original document reading position between the contact glass 3 and the sheet original document cover 17 while irradiating a light from the light source 4a of the first moving member 4 stopped there.

In the book mode, when the SDF is open and the original document G is set on the contact glass 3, the light source 4a is lighten and the reference white plate (not shown) is initially read, thereby, reference data for shading correction use is obtained. Then, the first and second moving members are moved in a sub scanning direction and an image on the original document G is read while a light path length between the original document G and the CCD 7 is kept constant.

Further, in the SDF mode, when a plurality of original documents G is set on the original table 11, the light source 4a is initially lightened, and the reference white plate (not shown) 21 is read. Then, the first moving member 4 is moved to the reading position (a home position) of the contact glass 3 just beneath the sheet original document cover 17 and is stopped there.

Then, the sheet feed and separation rollers 12 and 13 separate and feed the plurality of documents G set on the original document table 11 one by one to the original document reading position just beneath the sheet original document cover 17 after a time to feed is adjusted at the registration roller 15. The original document G is simultaneously conveyed at a constant speed. The first and second moving members 4 and 5 are kept stopping. A light is irradiated to the original document G conveyed through the reading position. The light reflected from the original document G is guided through the contact glass 3 again. The mirror 4c and the pair of mirrors 5a and 5b of the second moving member 5 then reflect and cause the light to enter into the CCD via the lens 6. The CCD then performs the photoelectric conversion and thereby digitally reads an image of the original document G.

Further, in order to detect presence of a dust or the like on an exposure light path in the SDF mode, the white sheet 20 is read and an image signal is obtained at a prescribed detection time, such as a time before reading the original document G, etc.

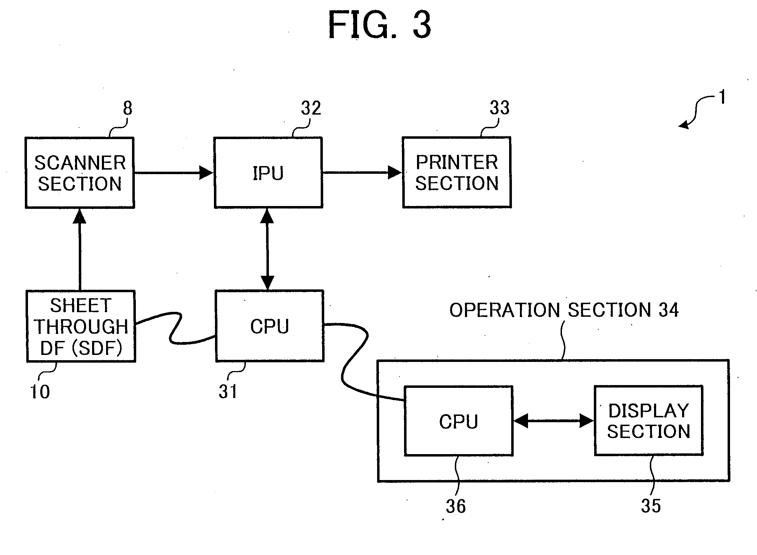

The digital copier 1 includes, as illustrated in FIG. 3, several blocks, for example, the above-mentioned SDF 10, the scanner section 8, a CPU (Central Processing Unit) 31, an IPU (Image Processing Unit) 32, a printer section 33, and an operation section 34 and the like.

The operation section 34 includes various operational keys and a display section 35. Also included is a CPU 36 to display various instructions and setting details input through the operation keys on the display section 35. The CPU 36 outputs and receives various information reports to and from the CPU to display on the display section 35 by its own control.

The SDF 10 conveys original documents G one by one to the reading position. The scanner section then reads an image on the original document G conveyed in such a way. The IPU 32 performs a series of image processing. The printer section then printouts the image onto a sheet.

The IPU 32 performs image processing in accordance with parameter set by the CPU 31. Mode information required when the parameter is set is designated by a user through the operation section 34.

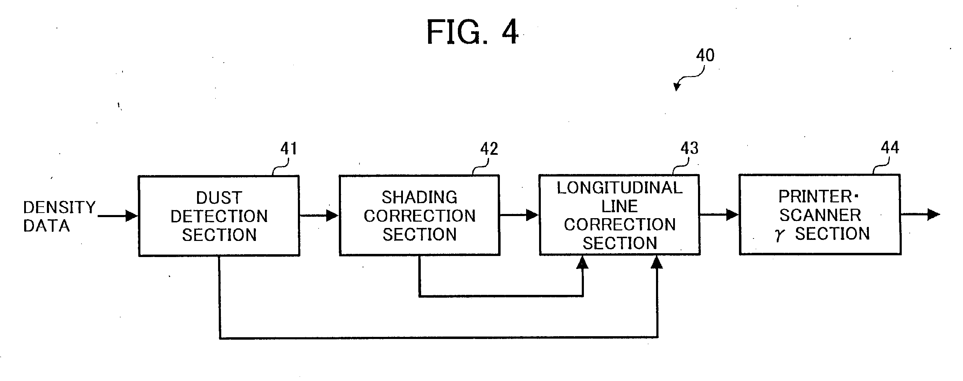

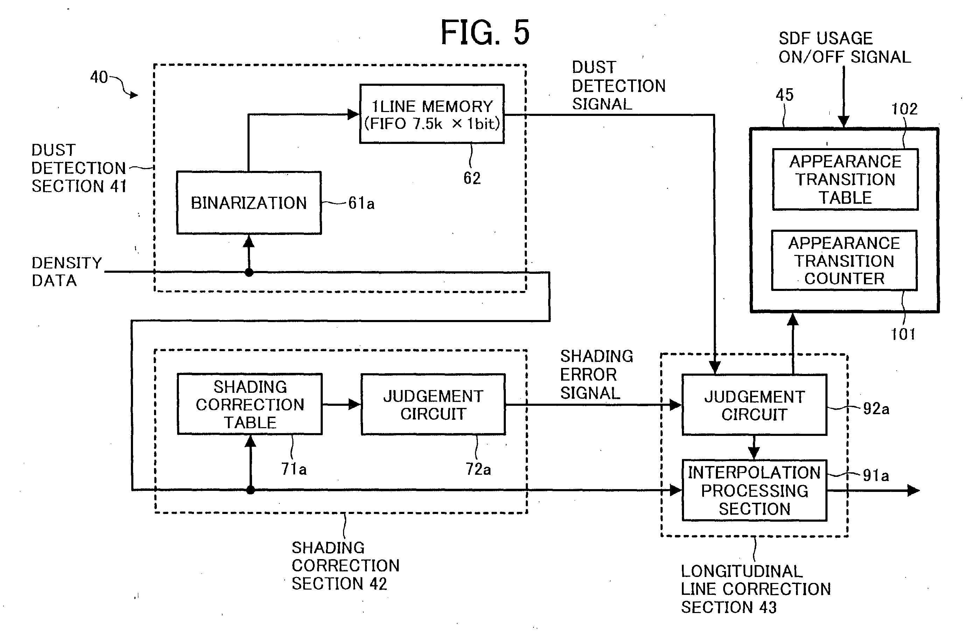

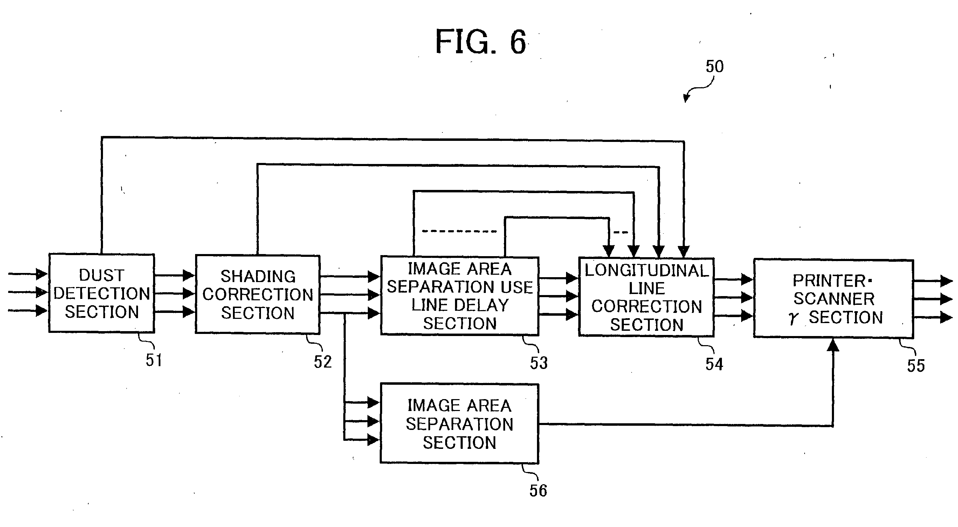

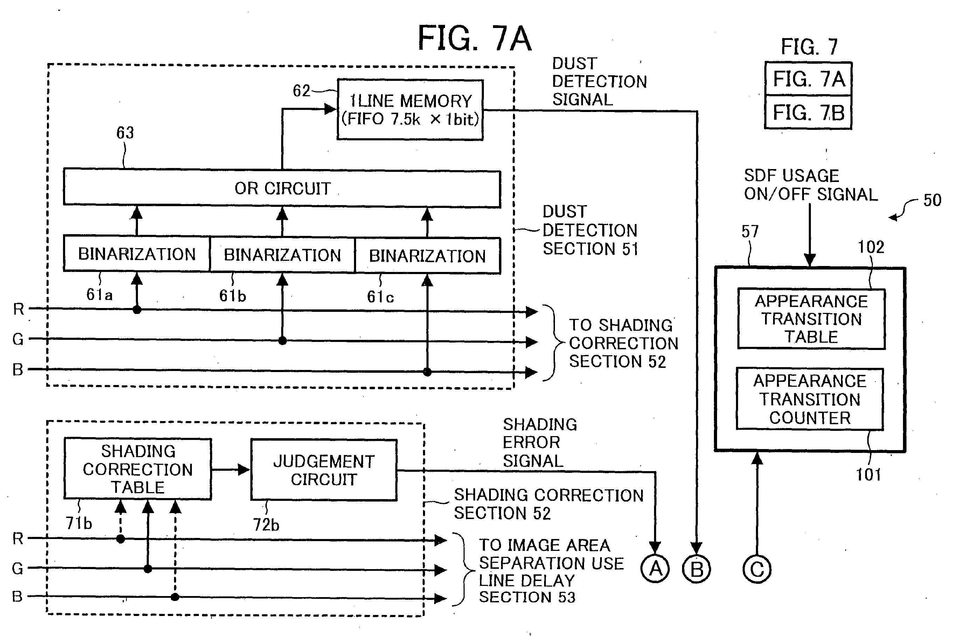

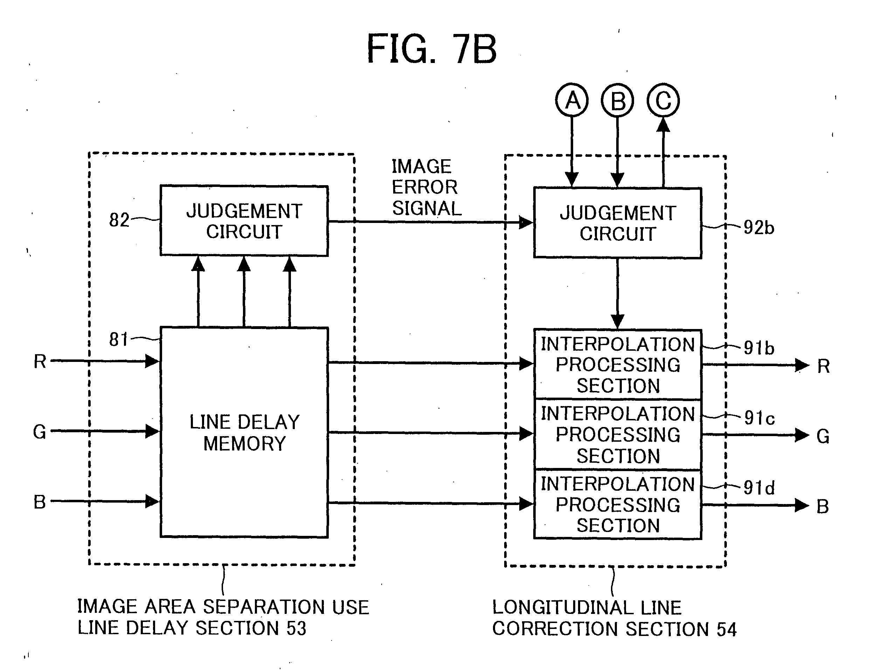

Further, the IPU 32 includes a dust correction circuit 40 for mono-color use as illustrated in FIGS. 4 and 5. In a case of full-color, the IPU 32 includes a full-color use dust correction circuit 50 as illustrated in FIGS. 6 and 7.

As illustrated in FIG. 4, the mono-color use dust correction circuit 40 includes a dust detection section 41, a shading correction section 42, a longitudinal line correction section 43, a printer/scanner gamma section 44, and an appearance supervising section 45 illustrated in FIG. 5. Density data transmitted from the scanner section 8 is sequentially input to the dust detection section 41, the shading correction section 42, the longitudinal line correction section 43, and the printer/scanner gamma section 44 in order.

Further, the full-color use dust correction circuit 50 includes, a dust correction section 51, a shading correction section 52, an image region separation use line delay section 53, a longitudinal line correction section 54, a printer/scanner gamma section 55, an image region separation section 56, and an appearance supervising section 57 of FIG. 7. RGB image data is sequentially input from the scanner section 8 to the dust detection section 51, the shading correction section 52, the image region separation use line delay section 53, the longitudinal line correction section 54, and the printer/scanner gamma section 55 in order. Beside that, the data is input to the image region separation section 56 branching off from the shading correction section 52.

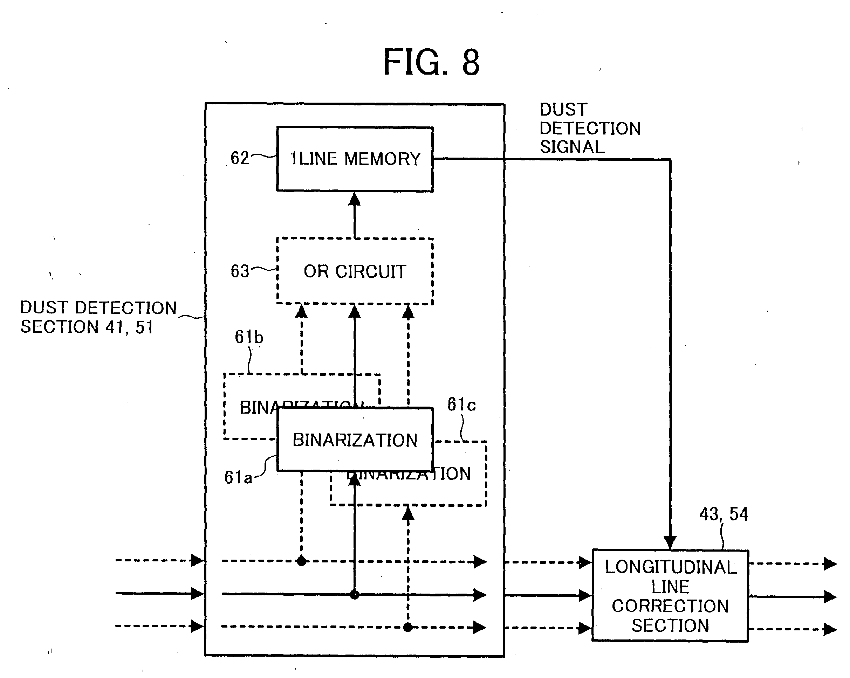

The dust detection section 41 includes, as illustrated in FIG. 5, a binarizing circuit 61a and a one-line memory 62 such as a FIFO (First in First out). The dust detection section 51 includes, as illustrated in FIG. 7, three binarizing circuits 61a to 61c, an OR circuit 63, and a one-line memory 62. Each of the dust detection sections 41 and 51 is represented by a rigid line when it is mono-color use as illustrated in FIG. 8. The dust correction section 51 is represented by rigid and dotted lines when it is full-color use as illustrated in FIG. 8.

Further, these dust detection sections 41 and 51 output ON/OFF dust detection signals of one bit, to the longitudinal line correction sections 43 and 54, respectively, as a result of dust detection.

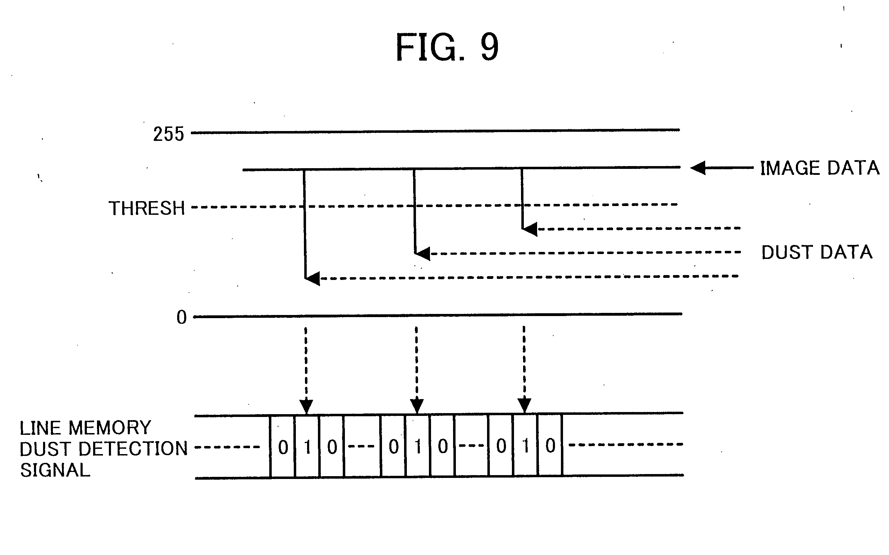

Specifically, in these dust detection sections 41 and 51, the dust presence is determined in the plurality of binarizing circuits 61a to 61c, by comparing the image data with a prescribed thresh level to binarize as shown in FIG. 9. Thus, detection signals "1" and "0" representing the presence and absence of the dust, respectively, are stored in the one-line memory 62 and then are output to the longitudinal line correction sections 43 and 54.

Further, as shown in FIG. 8, density data as image data is input to the mono-color use dust detection section 41. RGB three date as image data are input to the full-color use dust detection section 51. Thus, a mono-color use circuit is formed from only a rigid line circuit. A full-color use circuit is formed from rigid and dotted line circuits. In a case of mono-color use, since the scanner section 8 reads the white sheet 20 of the original document cover 17 when a dust is absent, input image data are almost white data. When a dust exists, since a dust portion turns out a shade, image data is almost black. Accordingly, a simple binarizing circuit 61a is provided in the mono-color use dust detection section 41, and data "0" and "1" are input to the one-line memory 62 when image data is white and black, respectively. Accordingly, data itself in the one-line memory 62 indicates a dust detection result.

Further, in the full-color use dust detection section 51, there are RGB three data as input data, three binarizing circuits 61a to 61c apply binarization to respective three RGB data. Then, a simple OR logic is applied thereto in the OR circuit 63, and an output thereof is written into the one-line memory 62. Then, correction can be independently performed to each of the respective colors. However, since a reading position reading the RGB mono-colors deviates in the scanner section 8, a color line highly provably appears. Accordingly, when a dust is detected in any one of the RGB colors, correction is applied to the entire RGB colors in order to prevent the color line.

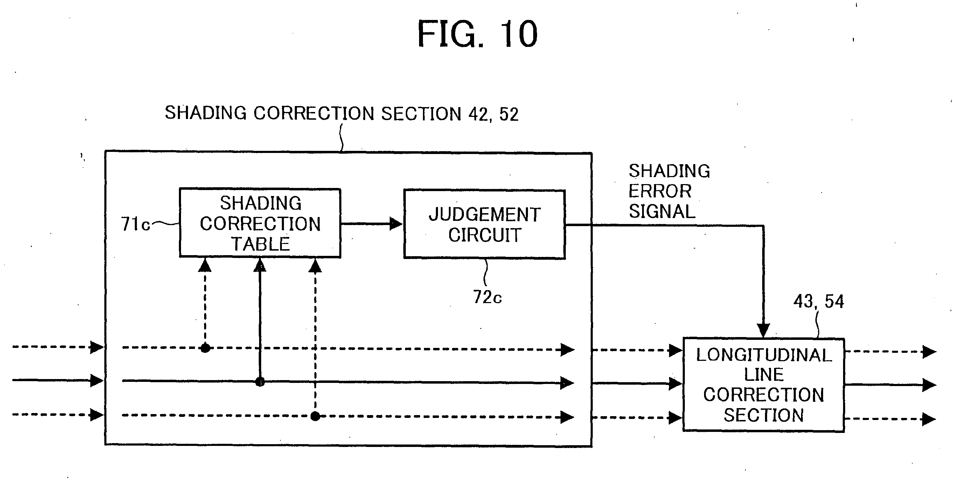

As illustrated in FIG. 5, the mono-color use shading correction section 42 includes a shading correction table 71a and a determination circuit 72a. The full-color use shading correction section 52 includes a shading correction table 71b and a determination circuit 72b illustrated in FIG. 7. These shading correction sections 42 and 52 can be represented by a shading correction table 71c including the shading correction tables 71a and 71b, and a determination circuit 72c including the determination circuits 72a and 72b as illustrated in FIG. 10, respectively. Accordingly, the mono-color use shading correction section 42 is represented by a rigid line, and the full-color use shading correction section 52, both rigid and dotted lines, respectively.

As shown, density data as image data is input to the mono-color use shading correction section 42, RGB three-color data as image data, the full-color use shading correction section 52, respectively. Thus, as mentioned above, the mono-color use shading correction section 42 is formed only from a circuit shown by the rigid line. The full-color use shading correction section 52 is represented by both the rigid and dotted lines.

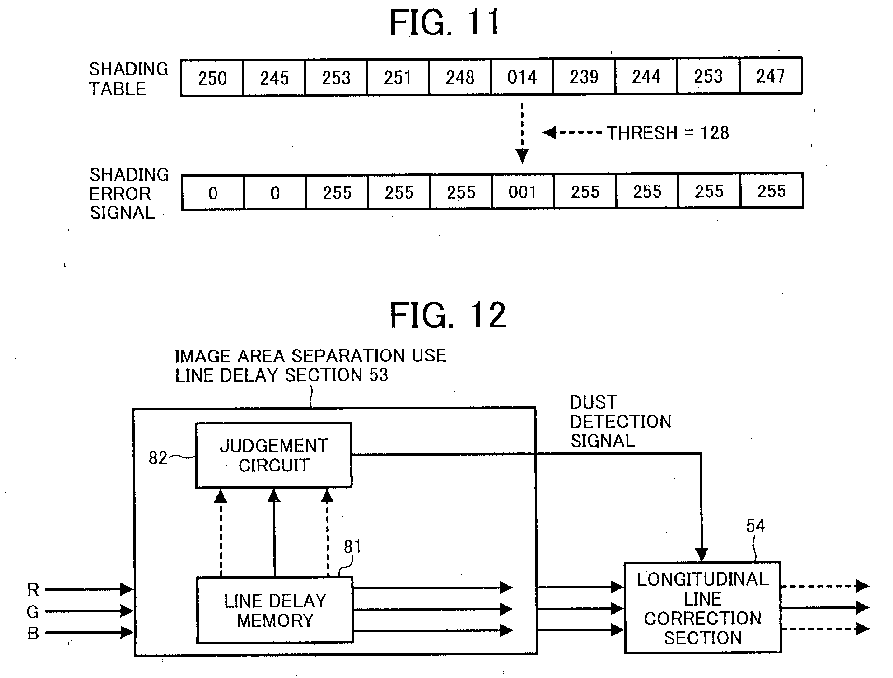

These shading correction Tables 71a, 71b, and 71c are provided to perform correction such that a reading value can be constant when a white reference plate 20 is read. For example, as shown in FIG. 11, when a dust is absent on the reference white plate 20, a read value is almost a correction needless level such as around the 255-degree. However, since a reading result is darker when a dust exists, a value such as around a zero level requiring large correction is written. Accordingly, per each of the plurality of determination circuits 72a, 72b, and 72c, a simple binarizing circuit is allocated. Then, when high and low levels are determined as being values "0" and "1", respectively, a shading error signal is generated and is output to each of the longitudinal line correction sections 43 and 54. Further, the full-color use shading correction section 52 includes shading correction use tables 71b and receives RGB three colors as input data. However, similar to when the dust is detected, binarization is applied and an output of the simple OR is served as a determination result.

Further, as illustrated in FIGS. 7 and 12, the image region separation use line delay section 53 includes a line delay memory 81 and a determination circuit 82 and the like. The line delay memory 81 employs an image data memory capable of storing a plurality of lines.

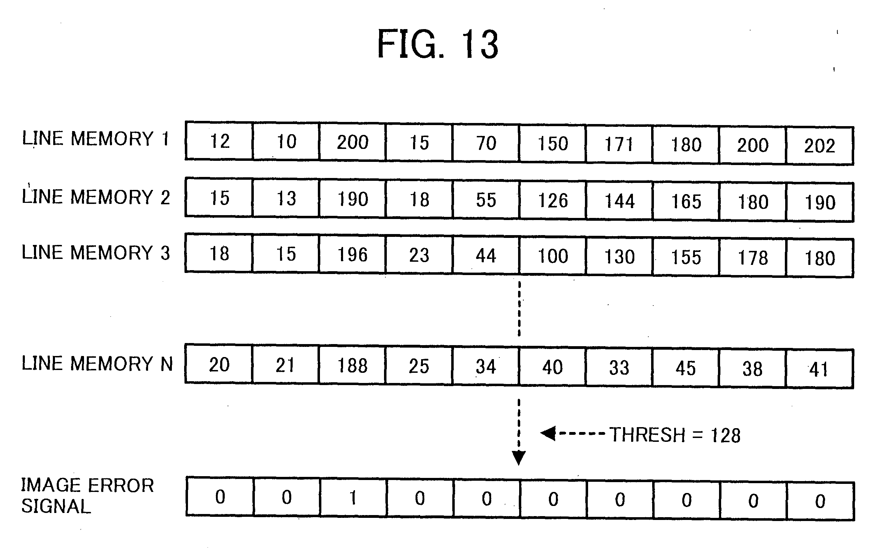

The image region separation use line delay section 53 cannot directly utilize a result of the binarization because data having the same density to the dust is included in ordinal image data. Thus, an image data memory for a plurality of lines is provided. Stated differently, in the case of the image data, since there exists data having the same density to the dust, a binarization result is not directly utilized, and an image data memory capable of storing a plurality of lines is utilized. Thus, when black data repeatedly appears at the same location, a black data continuing portion can highly provably correspond to a dust. Then, as illustrated in FIG. 13, the image region separation use line delay section 53 continuously determines binarization results in the respective lines in the line delay memory 81, and the determination circuit 82 outputs an image error signal when all of the binarization results indicate high levels (i.e., "1").

Further, the above-mentioned mono-color use longitudinal line correction section 43 includes an interpolation processing section 91a and a determination circuit (i.e., a dust position specifying device) 92a. The full-color use longitudinal line correction section 54 includes a plurality of interpolation processing sections 91b to 91d and a determination circuit (i.e., a dust position specifying device) 92b.

In the mono-color use longitudinal line correction section 43, a dust detection signal output from the dust detection circuit 41 and a shading error signal output from the shading correction section 42 are input to the determination circuit 92a. The determination circuit 92a determines and outputs a determination result as shown in Table 1 to the interpolation processing section 91a and an appearance supervising section 45. Then, to the interpolation processing section 91a, density data serving as image data is input. The interpolation processing section 91a applies interpolation processing to the density data in accordance with a determination result as shown in Table 1 and outputs an interpolation processing result.

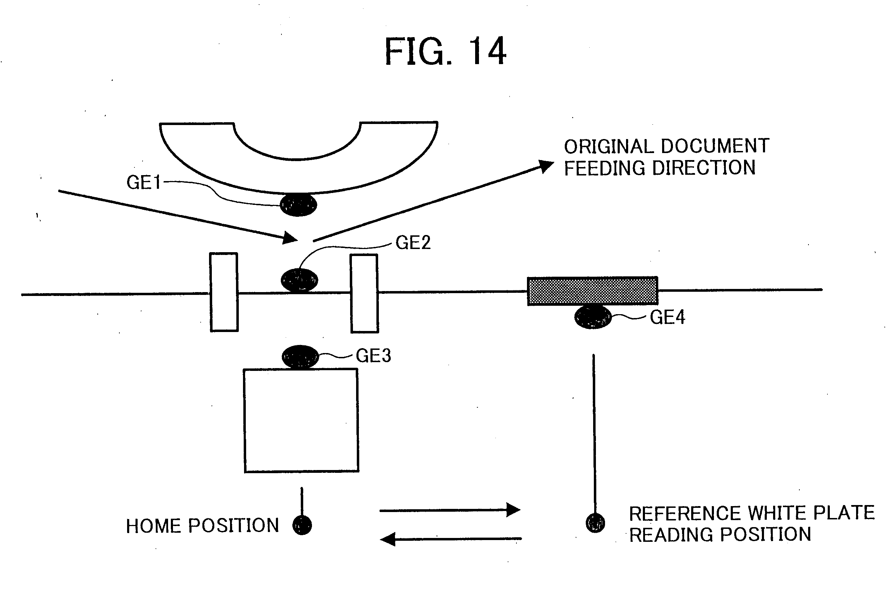

Further, in Tables 1 and 2, alphanumeric numbers GE1 to GE4 represent dusts appearing at a predetermined plurality of positions as illustrated in FIG. 14. The dust GE1 represents a dust sticking to the surface of the contact glass side of the sheet original document cover 17. The dust GE2 represents a dust sticking to the contact glass 3. The dust GE3 represents a dust sticking to at least one of the light source 4a, the reflector 4b, and the pair of moving members 4 and 5 such as mirrors 5a and 5b. Further, the dust GE4 represents a dust sticking to the reading surface of the reference white plate 20. Each of such dusts GE1 to GE4 covers a foreign particle and a cut or the like.

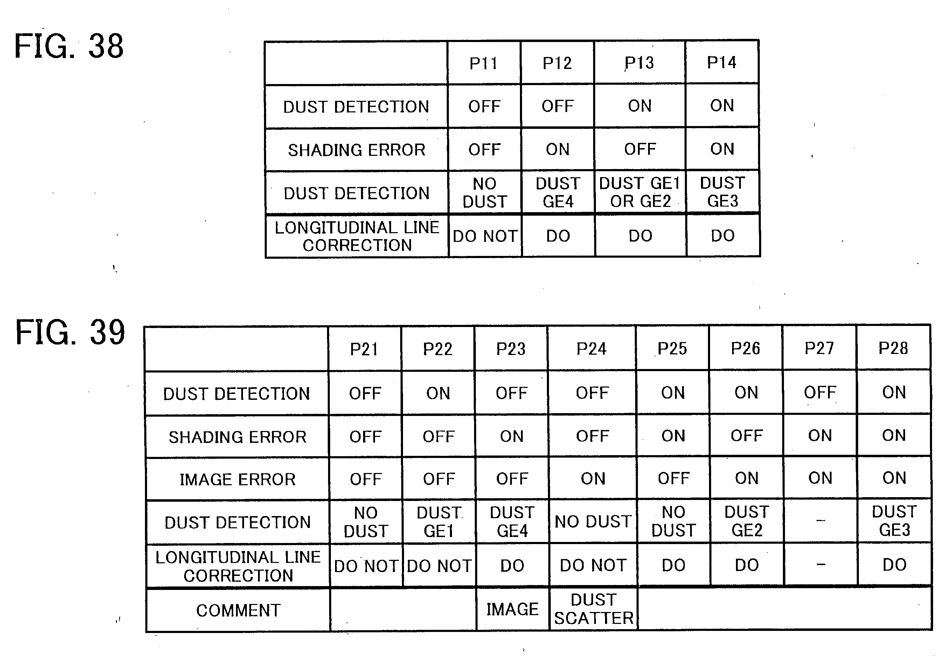

Referring to Table 1 shown in FIG. 38, alphanumeric number P11 represents a case when an error is detected neither in the dust detection section 41 nor in the shading correction section 42. The mono-color use longitudinal line correction section 43 then determines that a dust is absent and does not perform longitudinal line correction. Alphanumeric number P12 represents a case when a dust is not detected but only a shading error is detected. The longitudinal line correction section 43 then determines that a dust (i.e., the dust GE4) exists on the reference white plate 20 and performs longitudinal line correction. Alphanumeric number P13 represents a case when only a dust is detected but a shading error is not detected. The longitudinal line correction section 43 then determines that a dust (i.e., the dust GE1 or GE2) exists in the vicinity of the reading position of the SDF 10 and performs longitudinal line correction because the dust GE1 cannot be distinguished over the dust GE2 even if the dust GE1 itself does not need the longitudinal line correction. Alphanumeric number P14 represents a case when dust and shading errors are detected. The longitudinal line correction section 43 then determines that the dust GE3 exists and performs longitudinal line correction.

In the full-color use longitudinal line correction section 54, a dust detection signal output from the dust detection section 51, a shading error signal output from the shading correction section 52, and an image error signal output from the image region separation use line delay section 53 are input to the determination circuit 92b. The determination circuit 92b determines and outputs a determination result as shown in Table 2 of FIG. 39 to the interpolation processing sections 91b to 91c and the appearance supervising section 57. Then, the plurality of interpolation processing sections 91b to 91c receive inputs of RGB data as image data, respectively, and perform interpolation processing in accordance with the determination result of the determination circuit 92b and then outputs respective interpolation processing results as shown in Table 2.

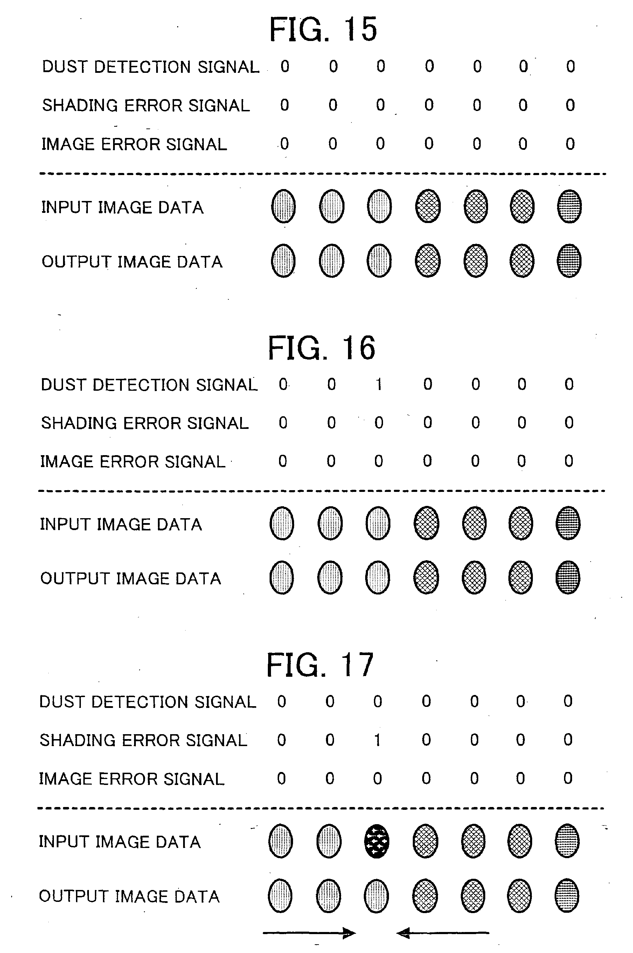

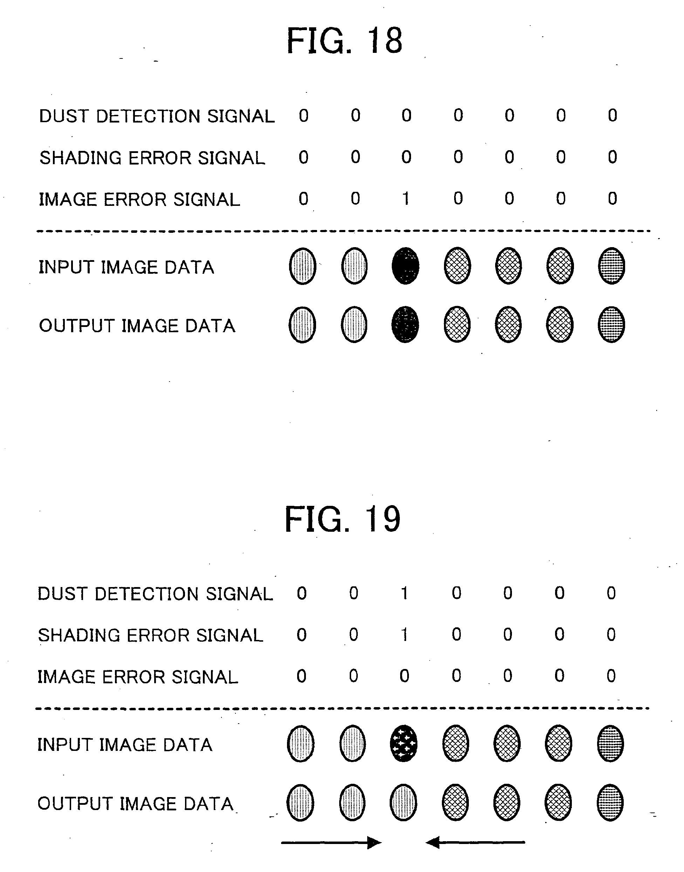

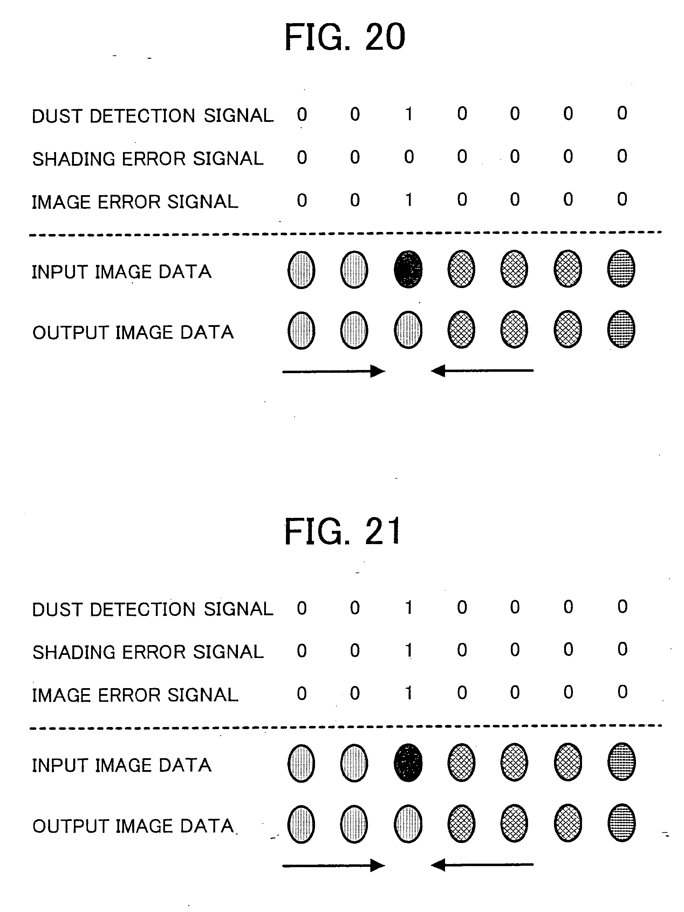

In Table 2, alphanumeric number P21 represents a case when none of error is detected in the dust detection section 51, the shading correction section 52, and the image region separation use line delay section as shown in FIG. 15. The full-color use longitudinal line correction section 43 then determines that a dust is absent and does not perform longitudinal line correction, and outputs input image data as it is. Alphanumeric number P22 represents a case when only a dust is detected and neither shading error nor image error is detected as illustrated in FIG. 16. The longitudinal line correction section 54 then determines that a dust (i.e., the dust GE1) exists on the sheet original document cover 17 and does not perform longitudinal line correction, and outputs input image data as it is because the dust is intercepted by the original document G when the original document is read. Alphanumeric number P23 represents a case when only a shading correction error is detected and neither a dust nor image error is detected as illustrated in FIG. 17. The longitudinal line correction section 54 then determines that a dust (i.e., the dust GE4) exists on the reference white plate 20, and applies longitudinal line correction to input image data, and outputs such correction result, because there is no defect in an image itself, but a shading correction results in an error. Alphanumeric number P24 represents a case when only an image error is detected and neither a dust nor shading error is detected as illustrated in FIG. 18. The longitudinal line correction section 54 then determines such a situation as erroneous detection owing to a longitudinal line existing on the original document G, and does not perform longitudinal line correction while determining the situation as absence of a dust, and outputs the input image data as it is. Alphanumeric number P25 represents a case when dust and shading errors are detected and an image error is not detected as shown in FIG. 18. The longitudinal line correction section 54 then determines that a dust is absent because it flies away by some reason, but applies longitudinal line correction to input image data, and outputs such correction result, because shading correction results in an error. Alphanumeric number P26 represents a case when dust and image errors are detected and a shading error is not detected as shown in FIG. 20. The longitudinal line correction section 54 then determines that there exists a dust on the contact glass, and performs longitudinal line correction. Alphanumeric number P27 represents a case when shading and image errors are detected and a dust is not detected. The longitudinal line correction section 54 neglects and does not perform longitudinal line correction because such a mode does not exists. Alphanumeric number P28 represents a case when dust, image and shading errors are detected as shown in FIG. 21. The longitudinal line correction section 54 then determines that there exists the dust GE3, and performs longitudinal line correction.

Further, since there is no image error signal, the mono-color use only relates to four drawings among FIGS. 15 to 21. Specifically, alphanumeric numbers P11, P12, P13, and P14 correspond to FIGS. 15, 17, 16, and 19, respectively.

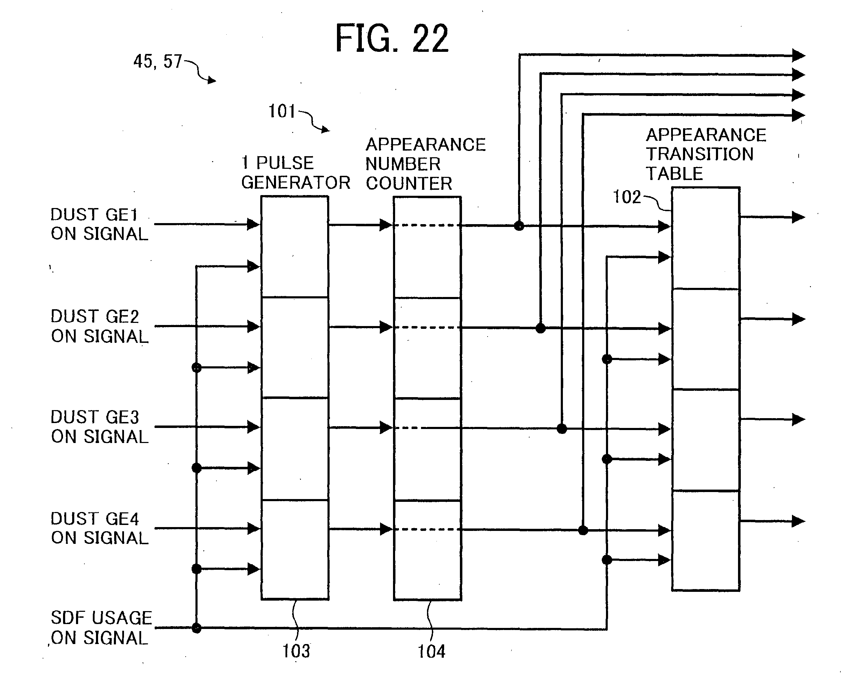

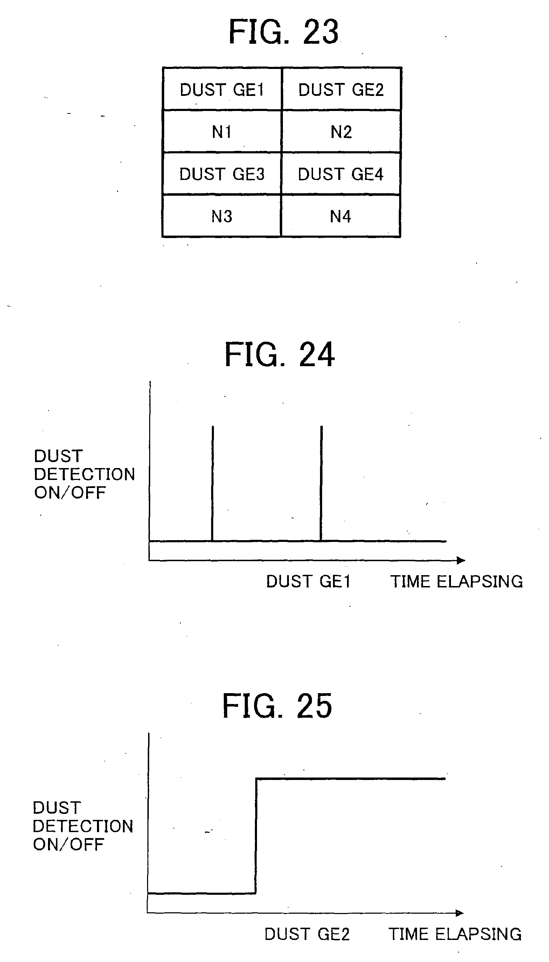

Further, the appearance supervising section 45 for mono-color use has a similar configuration to that 57 for full-color use. Specifically, they employ an appearance transition counter (i.e., an appearance times counting device) 101 and an appearance transition table (an appearance transition device) 102. As shown in FIG. 22, the appearance supervising sections 45 and 57 each includes an appearance transition counters 101 arranged to count turn ON signals activated when the dusts GE1 to GE4 appear. Also included are a one-pulse generators 103 generating a one-pulse upon receiving respective activated dust GE1 to GE4 signals, and appearance times counters 104 counting a total number of appearance times of the respective dusts GE1 to GE4 by counting a number of pulses generated by the one-pulse generators 103. To the one-pulse generators 103 and the appearance transition table 102, an SDF usage ON/OFF signal, turned ON when the SDF is utilized, is input from the SDF 10. The one-pulse generators 103 output one pulse to the appearance times counters 104 when the SDF usage ON/OFF signal turned ON and dust GE1 to GE4 ON signals turned ON are input. As illustrated in FIG. 23, the appearance times counters 104 sequentially count a number of pulses (i.e., N1 to N4) output from the one-pulse generators 103, and hold for the respective dusts GE1 to GE4. The appearance time counters 104 outputs a counted number to the appearance transition table 102 and the CPU 31.

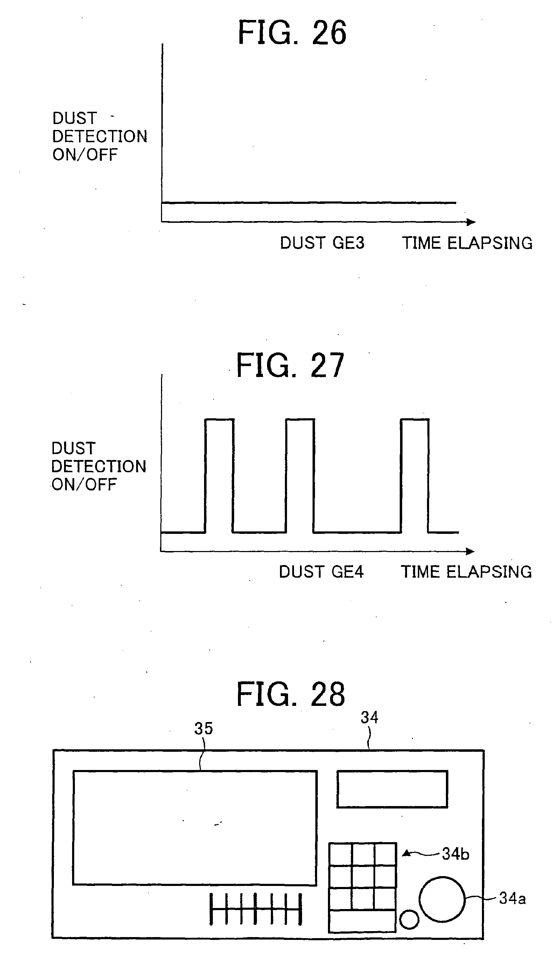

The appearance transition table 102 indicates transitions of appearance of the respective dusts GE1 to GE4 when the SDF usage ON/OFF signal is turned ON. For example, as shown in FIGS. 24 to 27, each of the various tables for the dusts GE1 to GE4 includes a vertical axis representing a dust detection ON/OFF condition, and a horizontal axis representing time elapsing from when the SDF is firstly used. Specifically, FIG. 24 illustrates the transition table of the dust GE1. As shown, since dust detection is accidentally being turned ON, that is, a small number of floating dusts is accidentally detected, it means that maintenance is not required. FIG. 25 illustrates the transition table of the dust GE2. As shown, since the dust detection activated (i.e., ON) condition starts and continues after a prescribed time point, it represents that a dust or cut sticks, thereby certain maintenance is required. FIG. 26 illustrates a transition table of the dust GE3. As shown, since a dust detection inert (i.e., OFF) condition continues, it represents that maintenance is needless. FIG. 27 illustrates the transition table of the dust GE4. Since it is not continuously in a dust detection activated condition, but such a condition highly frequently or continuously appears, it represents necessity of a check.

Further, in the above-mentioned operation section 34, various keys beside a start key 34a, a ten key 34b and so on to be used in a one touch manner employ a display device 35 such as a large scale display. The operation section 34 is controlled by the CPU 36 to display an appearance counter value counted by the appearance time counter 104 and the appearance transition table on a display screen of the display section 35. Specifically, since both the appearance counter value and the appearance transition table are stored in the appearance times counter 104 and the appearance transition table 102, the CPU 31 reads and transfers them to the CPU 36 of the operation section 34, and writes them into the memory in the operation section 36, and displays them on the display section 35.

Now, an operation of the above-mentioned preferred embodiment is described. When the digital copier 1 of the preferred embodiment reads an image from an original document G in the SDF mode, the first moving member 4 initially moves to and reads the reference white plate 21 prior to the original document G so as to obtain shading correction data. Upon completion of the reading, the digital copier 1 conveys the first moving member 4 to the home position. Then, the SDF 10 separates and conveys the original documents G set on the original document table 11 one by one to the home position. The scanner section 8 then reads the original document G passing through the reading position.

During the above-mentioned operation, the registration roller adjusts a time to convey the original document to the original document reading position. The SDF 10 conveys the original document G at a constant speed while the first and second moving members 4 and 5 are stopped. The light source 4a irradiates a light to the original document G conveyed through the contact glass. A light reflected from the original document G is reflected again by the mirrors 4c, 5a, and 5b via the contact glass 3. The reflected light then enters into the CCD 7 via the lens 6. The CCD 7 performs photoelectric conversion thereby digitally reading the image of the original document G.

Then, in order to detect presence of dust or the like on the exposure light path, the white sheet 20 is read via the contact glass 3 and an image signal is obtained at a predetermined detection timing such as a time before reading the original document G, etc.

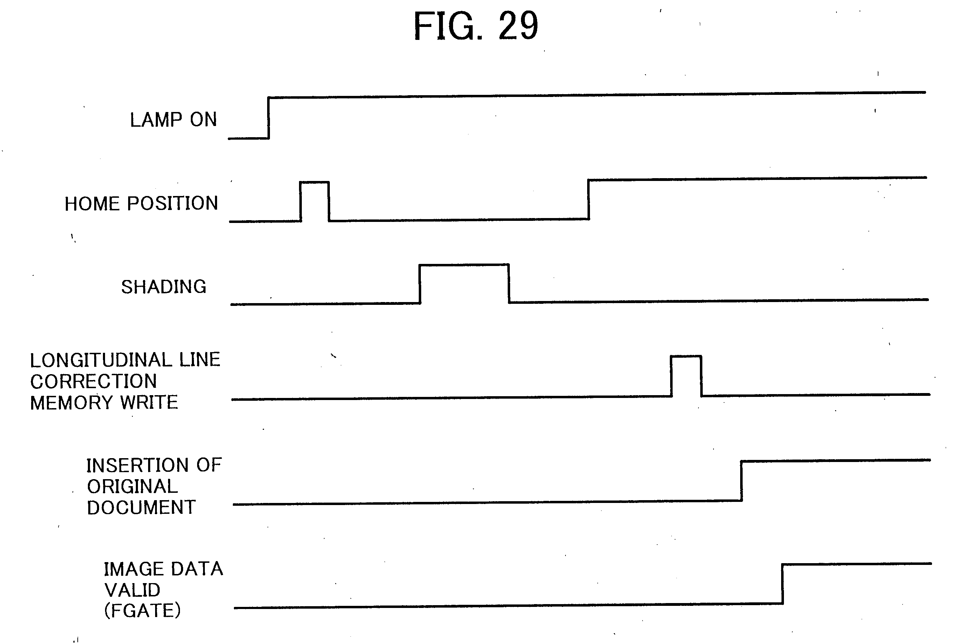

Specifically, the digital copier 1 controls, as illustrated in FIG. 29, lightening of the light source 4a, movement of the first moving member 4 to the home position, obtaining of the shading data, writing of longitudinal line correction data in the memory, a time of inserting the original document G, and generation of image data valid signal GATE.

Further, the IPU 32 applies series of image processing to image data read by the scanner section 8 from the original document G. The printer section 33 prints out an image on a sheet. The IPU 32 simultaneously performs the image processing based upon parameter set by the CPU 31. Mode information necessary in setting the parameter is designated by the user through the operation section 34.

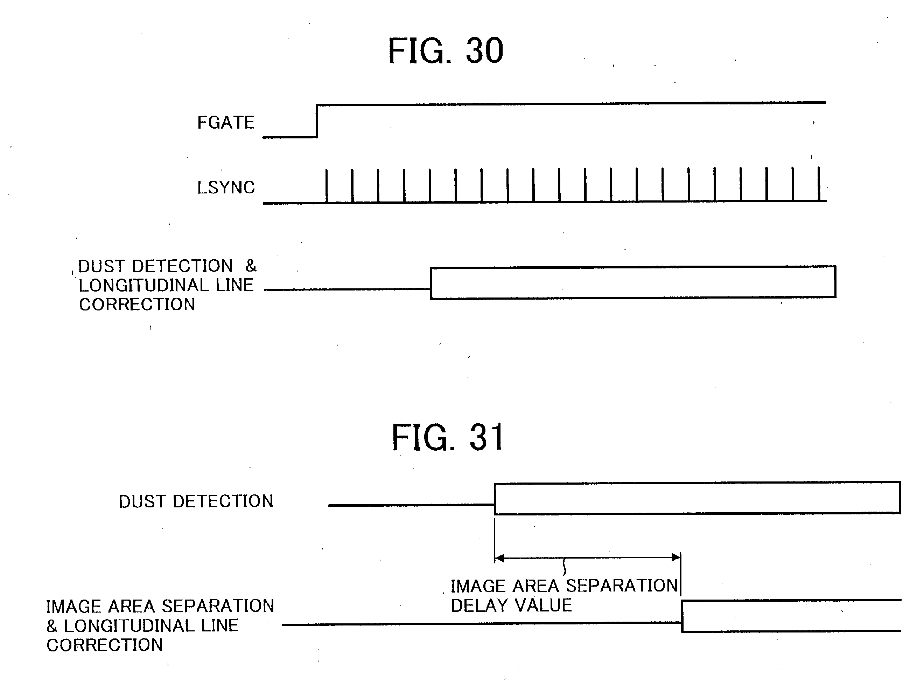

The digital copier 1 performs dust detection and longitudinal line detection at an applicable time as illustrated in FIG. 30 in a case of mono-color. The digital copier 1 performs dust detection as well as the image region separation and longitudinal line detection at an applicable time as illustrated in FIG. 31.

The dust detection sections 41 and 51 determine presence of a dust by comparing image data with a prescribed thresh level and binarizing a comparison result in the binarizing circuits 61a to 61c. Dust detection signals indicating "1" and "0" in accordance with the dust detection results are stored in the one-line memory 62, and are output to the longitudinal line correction sections 43 and 54. Specifically, in the mono-color use dust detection section 41, density data is input as image data. In the full-color dust detection section 51, RGB three-color data are input as image data. In a case of the mono-color use density data, since the scanner section 8 reads the white sheet 20 when a dust is absents, an input is almost white data. Since a dust portion turns out a shade when a dust exists, an input is almost black data. Accordingly, a simple binarizing circuit 61a writes "0" and "1" in the one-line memory 62 when the image data are white and black, respectively. Accordingly, data in the one-line memory 62 itself indicates a dust detection result. In the color use dust detection section 51, binarization is applied to respective input data in the three binarizing circuits 61a to 61c, and a simple OR logic is applied to the binalizing result in the OR circuit 63. Then, an output of the OR circuit 13 is written in the one-line memory 62. The shading correction tables 71a, 71b, and 71c correct and cause a read value to be constant when the reference white plate 20 is read. For example, as illustrated in FIG. 11, a value (e.g. the 255 level) almost needless to correct is written when a dust is absent on the reference white plate. In contrast, when a dust exists, a value such as almost zero is written because of darker reading. The determination circuits 72a, 72b, and 72c determine levels as "0" and "1" in correspondence with higher and lower values, respectively, and outputs a shading error signal to the longitudinal line correction sections 43 and 54.

As shown in FIG. 13, a binarization result obtained in each of lines of the line delay memory 81 is continuously determined, and the determination circuit 82 outputs an image error signal when all of the same are high levels (i.e., "1").

In the mono-color longitudinal line correction section 43, the determination circuit 92a receives inputs of a dust detection signal from the dust detection section 41 and a shading error signal from the shading correction section 42 and then determines a situation as shown in Table 1. The determination circuit 92a outputs a determination result to the interpolation processing section 91a as well as the appearance supervising section 45. The interpolation processing section 91a then receives density data as image data and applies interpolation processing to the density data in accordance with the determination result made by the determination circuit 92a as shown in Table 1.

In the full-color use longitudinal line correction section 54, the determination circuit 92b receives inputs of a dust detection signal from the dust detection section 51, a shading error signal from the shading correction section 52, and an image error signal from the image region separation use line delay section 53, and determines a situation as shown in Table 2, and outputs a determination result to the interpolation processing sections 91b and 91c as well as the appearance supervising section 57. The interpolation processing sections 91b and 91c then receive RGB data as image data and apply interpolation processing to the RGB data, respectively, in accordance with the determination result.

The appearance transition counters 101 count a number of appearance times per each of the dusts GE1 to GE4, and totalize the number each time when the SDF 10 is turned ON. The appearance transition table 102 supervises dust appearance transition per each of the dusts GE1 to GE4 when the SDF usage ON/OFF signal is turned ON.

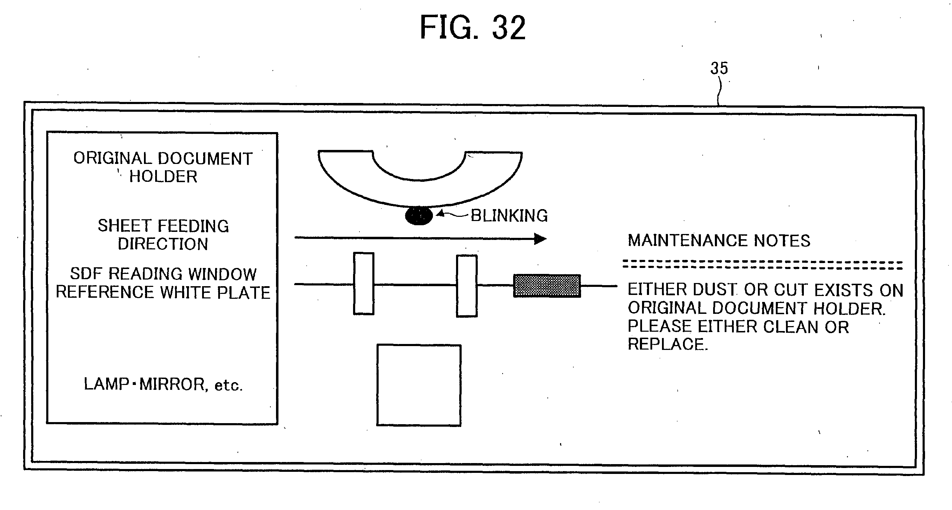

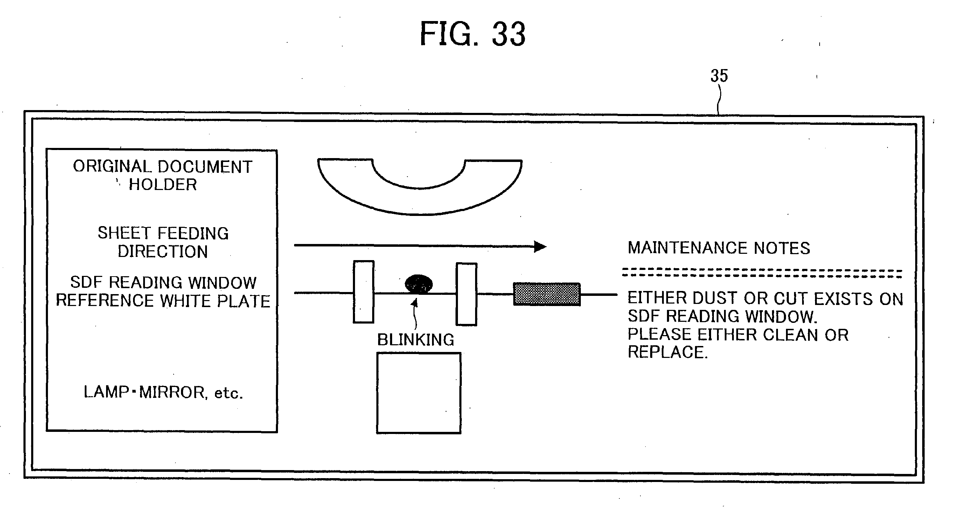

Then, the CPU 36 obtains and displays the appearance counter value counted by the appearance time counter 104 and the appearance transition table on the display 35. In this situation, a dust position of the dust GE1 is clearly indicated as shown in FIG. 32 and maintenance notes promoting cleanup or replacement are simultaneously displayed on the display 35. In the remaining cases of the dusts GE2, GE3, and GE4, dust positions are clearly indicated as shown in FIGS. 33, 34, and 35, respectively, and maintenance notes promoting cleanup or replacement are simultaneously displayed on the display 35.

As understood from FIGS. 32 to 35, since maintenance per each of the dusts GE1 and GE2 can be enough if cleaning is external performed, the maintenance notes can be immediately displayed when a frequency of dust detection becomes higher. However, maintenance per each of the dusts GE3 and GE4 is necessary when a dust enters into an interior of the body casing 2 and is difficult to remove. Thus, if maintenance notes are controlled not to display until the dusts GE3 and GE4 firmly stick and thus correction is continuously requested, the digital copier 1 can be improved in availableness. Thus, a maintenance notes display control program can be designed as mentioned below so that the CPU 31 or CPU 35 can control the display section 35 to display the maintenance notes in accordance with the maintenance notes display control program.

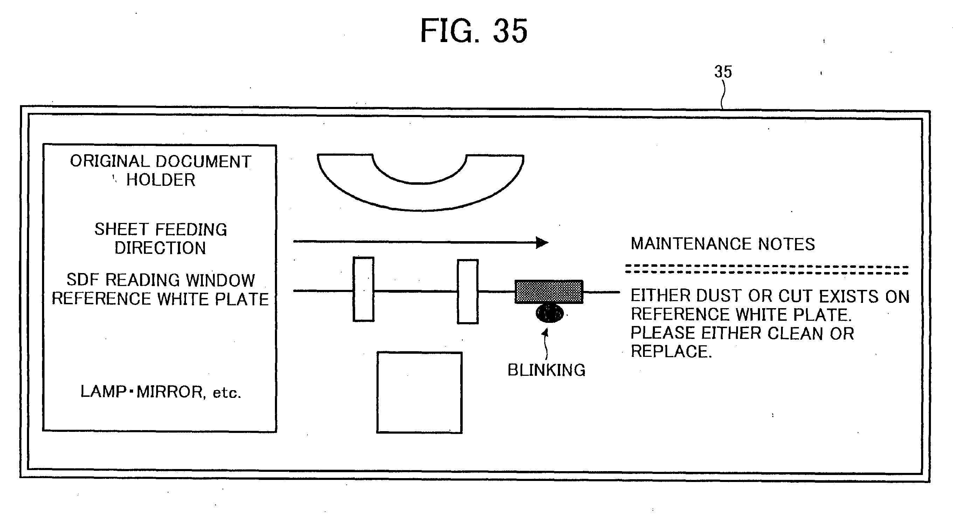

"if ((the total number of detection times of a dust GE4 is greater than N4th1) & (the maximum value of a continuous dust GE4 value is greater than N4th2) & (the newest detection data of a dust GE4 is turned ON) : Display (maintenance note: dust GE4 (FIG. 35))"

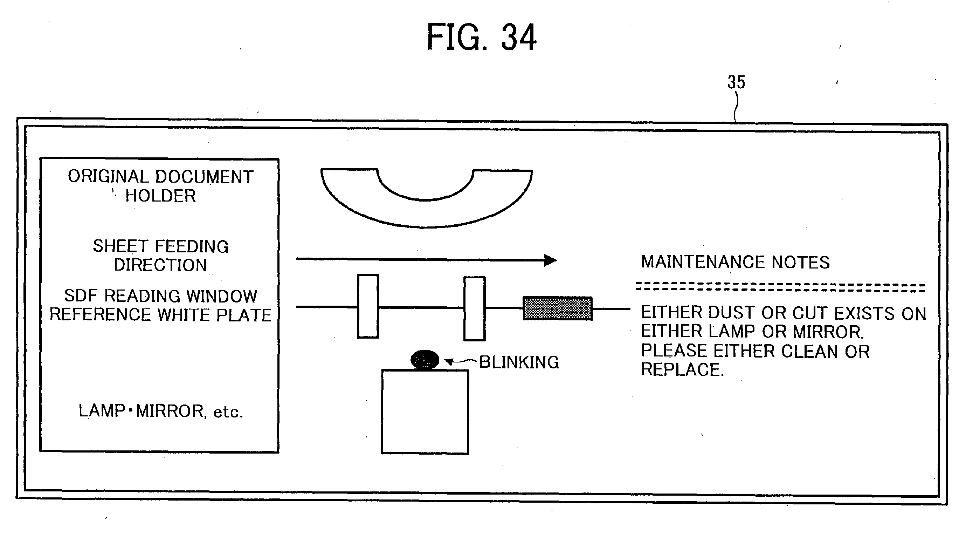

"Else if ((the total number of detection times of a dust GE3 is greater than N3th1) & (the maximum value of a continuous dust GE3 value is greater than N3th2) & (the newest detection data of a dust GE3 is turned ON): Display (maintenance notes: dust GE3 (FIG. 34))"

"Else if (the total number of detection times detecting dust GE2 is greater than N2th1): Display (maintenance notes: dust GE2 (FIG. 33))"

"Else if (the total number of detection times of a dust GE1 is greater than N1th1) : Display (maintenance notes: dust GE1 (FIG. 32))"

Further, if the CPU 31 or 36 is enabled to optionally set N1th, N2th, N3th, N3th2, N4th, and N4th2 using a program, a time for displaying maintenance notes can be readily changed in accordance with a dust detection signal generation frequency.

Numerous additional modifications and variations of the present invention are possible in light of the above teachings. It is therefore to be understood that within the scope of the appended claims, the present invention may be practiced otherwise that as specifically described herein.

## Claims

1. An image processing apparatus (1), comprising:
a reading device (4) stationed at a reading position, said reading device (4) including a light source (4a) configured to irradiate a reading light to an original document (G) passing therethrough;
a photoelectric conversion element (7) configured to convert the reading light reflected from the original document (G) into image data;
a shading correction function (42) operative to apply shading correction to the image data in accordance with reference data obtained from a reference white plate (21);
a memory (62) configured to store at least a line of the image data;
a dust position specifying device (41) configured to specify a position of dust by detecting presence of the dust at predetermined positions (GE1 to GE4) on a light path extending from the light source (4a) to the photoelectric conversion element (7) in accordance with the image data;
a counting device (45) configured to count a number of appearances of dust for each of the predetermined positions (GE1 to GE4); and
an appearance transition device (57,101,102) configured to store appearance transition data of the dust for each of the predetermined positions (GE1 to GE4).

2. An image processing apparatus (1), comprising:
a reading device (4) stationed at a reading position, said reading device (4) including a light source (4a) configured to irradiate a reading light to an original document (G) passing therethrough;
a photoelectric conversion element (7) configured to convert the reading light reflected from the original document (G) into image data;
a shading correction function (42) operative to apply shading correction to the image data in accordance with reference data obtained from a reference white plate (21);
a memory (62) configured to store at least a line of the image data;
a delaying device (53) configured to apply line delay processing for image region separation use to the image data;
a dust position specifying device (41) configured to specify a position of dust by detecting presence of the dust at predetermined positions (GE1 to GE4) on a light path extending from the light source (4a) to the photoelectric conversion element (7) in accordance with the image data and a result of the delay processing;
a counting device (45) configured to count a number of dust appearances for each of the predetermined positions; and
an appearance transition device (57, 101, 102) configured to store appearance transition data of the dust for each of the predetermined dust positions (GE1 to GE4).

3. The image processing apparatus according to any one of claims 1 and 2, further comprising a display (35) configured to display at least one of the number of dust appearances and the dust appearance transition data for each of the predetermined positions (GE1 to GE4).

4. The image processing apparatus according to claim 3, wherein said display device displays (35) maintenance information to promote maintenance and specifies a dusty portion (GE1 to GE4) to service.
